# EUROPEAN PATENT APPLICATION

(11) **EP 4 374 738 A1**
(43) Date of publication of application: **29.05.2024**
(21) Application number: 22845494.8
(22) Date of filing: 20.07.2022
(51) Int. Cl.: A47B 57/40, A47B 47/02, A47B 57/50

(54) **JOINING SYSTEM FOR CONSTRUCTING METAL SHELVING**

(30) Priority: 23.07.2021 ES 202131543 U
(71) Applicant: Mecalux, S.A., 08940 Cornella De Llobregat (Barcelona) (ES)
(72) Inventor: CARRILLO RODRÍGUEZ, José Luís, 08940 Cornella de Llobregat (Barcelona) (ES)
(74) Representative: Isern Patentes y Marcas S.L.
(86) International application number: PCT/ES2022/070477
(87) International publication number: WO 2023/002083

(57) **Abstract**

Joining system for the construction of metal shelves, comprising a strut intended for a vertical arrangement, having a plurality of slots distributed along the length of the strut and being spaced apart, and a crossbar intended for an arrangement perpendicular to the strut which has at least one of its ends a connection profile with an L-shaped cross section that is attachable to the strut by overlapping in a releasable manner by coupling means, wherein the slots have a substantially rectangular-shaped contour in which one of the larger sides has an angle of inclination with respect to the longitudinal axis of the strut while the lower area of the opposite larger side is provided with a step, and wherein the coupling means present in the L-shaped connection profile, consist of a plurality of die-cut tabs.

## Description

### OBJECT OF THE INVENTION

The object of the present invention is to provide a joining system for the construction of metal shelves.

More specifically, the invention proposes the development of a joining system for the construction of metal shelves, which comprises a strut intended for a vertical arrangement, attachable by means of a removable coupling system to a crossbar with the arrangement of a L-shaped connection profile.

### BACKGROUND OF THE INVENTION

Metal structures are well known, such as shelves provided for the storage of articles, etc., which are formed from vertical struts provided with a plurality of slots distributed along the length thereof, and crossbars provided for an arrangement perpendicular to the struts that has at least one of its ends an L-shaped cross-section profile that is attachable to the strut by overlapping in a releasable manner through a coupling system that ensures the position between both members.

Examples of joining systems for joining vertical struts and crossbars for the construction of shelves are disclosed in documents ES 1076865U and ES 1052760.

However, the contact among the coupling systems provided between the crossbar and the struts may not provide a contact surface to ensure fixation between both elements, so it may negatively affect the rigidity of the structure so as to require the use of additional fixing elements, giving rise to a more complex system that requires more time to assemble the shelving.

Furthermore, the applicant is currently unaware of an invention that has all the features described in this specification.

### DESCRIPTION OF THE INVENTION

The present invention has been developed with the aim of providing a joining system which is configured as a novelty within the field of application and solves the aforementioned drawbacks, further contributing other additional advantages that will be obvious from the description below.

An object of the present invention is to therefore provide a joining system for the construction of metal shelves, being of the kind that comprise a strut intended for a vertical arrangement, having a plurality of slots distributed along the length of the strut and being spaced apart, and a crossbar intended for an arrangement perpendicular to the strut which has at least one of its ends a connection profile with an L-shaped cross section that is attachable to the strut by overlapping in a releasable manner by coupling means. In particular, the invention is characterized in that the slots have a substantially rectangular contour in which one of the larger sides has an angle of inclination with respect to the longitudinal axis of the strut while the lower area of the opposite larger side is provided with a step, and wherein the coupling means present in the L-shaped connection profile, consist of a plurality of die-cut tabs that are distributed along the length of one of the fins of the connection profile, being distanced from each other so that they fit into the slots present in the strut, including contiguously in each of the tabs a hook-shaped flange intended to be housed in the step, and wherein the tab consists of a bridge section, in which one of the longer sides has an angle of inclination with respect to the longitudinal axis of the tab, such that in an overlapping condition between the connection profile and the strut, the inclined sides of the slot and the tab are overlapping each other

Thanks to these features, a greater contact surface among the coupling means arranged in the connection profile and the strut is achieved, so that it provides a greater rigidity and resistance to bending in the connection area between the crossbars and struts.

Another advantageous aspect is the fact that the dimension of the gap intended for the insertion of the flange and the tab is reduced, thus allowing to obtain a greater effective area for the calculation of the strut.

According to another aspect of the invention, the strut is formed by a substantially U-shaped cross section such that it defines a flat central portion and two lateral fins facing each other, in which the central portion is divided into two equal portions by a central groove that extends longitudinally, each of the equal portion having grooves distributed along the length.

Preferably, each of the side fins has a flat extension and a flat recessed portion provided with a plurality of holes arranged at equidistance.

Preferably, the L-shaped connection profile is joined to the crossbar by welding.

Thus, the joining system described represents an innovative structure with structural and constituent features heretofore unknown for its intended purpose, reasons which, taken together with its usefulness, provide it with sufficient grounds for obtaining the requested exclusivity privilege.

Other features and advantages of the joining system object of the present invention will become apparent from the description of a preferred but not exclusive embodiment illustrated by way of non-limiting example in the attached drawings, in which:

### BRIEF DESCRIPTION OF THE DRAWINGS

Figure 1 is a perspective view of a shelf manufactured by the system according to the present invention;
Figure 2 is a partial front elevation view of a portion of the strut that is part of the system of the invention;
Figure 3 is a perspective view of a portion of the strut that is part of the system of the invention;

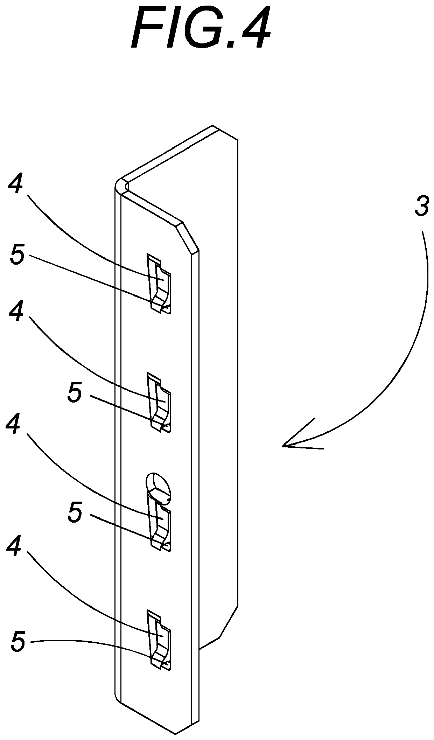

Figure 4 is a front perspective view of the connection profile that is part of the system of the invention;

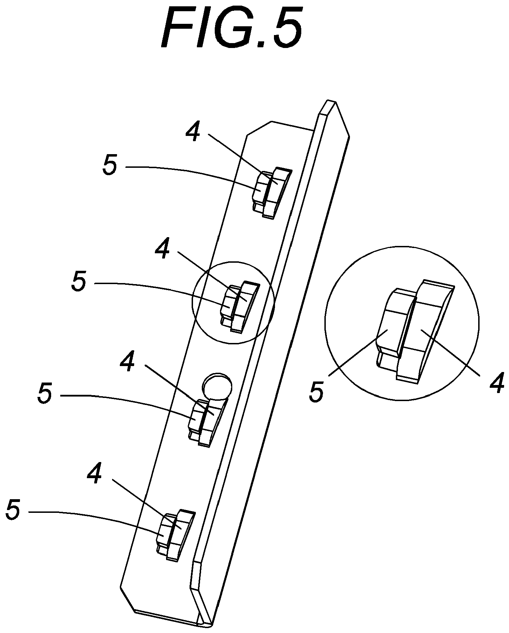

Figure 5 is a rear perspective view of the connection profile shown in Figure 4;
Figure 6 is a partial perspective view of the coupling of the connection profile with a portion of the strut; and
Figure 7 is a cross-sectional view of the coupling of the connection profile with a portion of the strut.

### DESCRIPTION OF A PREFERRED EMBODIMENT

In view of the aforementioned figures, and in accordance with the adopted numbering, one may observe therein a preferred exemplary embodiment of the invention, which comprises the parts and elements indicated and described in detail below.

Moreover, the terms first, second, third, and the like in the description and in the claims are used to distinguish between similar elements and not necessarily to describe a sequential or chronological order. The terms may be interchanged under appropriate circumstances and the embodiments of the invention may operate in sequences other than those described or illustrated herein.

Moreover, the terms top, bottom, top, bottom and the like in the description and claims are used for descriptive purposes and not necessarily to describe relative positions.

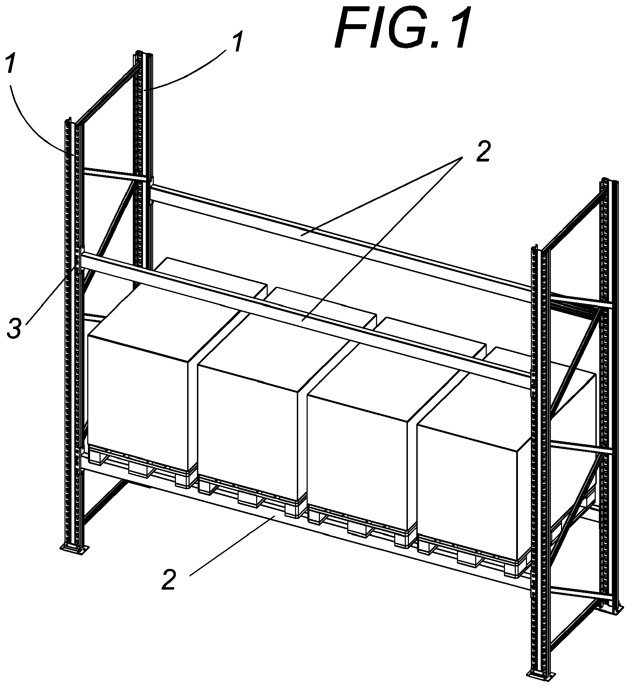

In Figure 1 a metal shelf used for storing articles, which has been manufactured from the joining system of the invention, can be seen. This system essentially comprises a strut (1) provided for a vertical arrangement, having a plurality of slots (10) that are distributed along the length of the strut and being spaced apart, and a crossbar (2) provided for a vertical arrangement perpendicular to the strut (1) that has at least one of its ends a connecting profile (3) that has an L-shaped cross section that is attachable to the strut (1) by overlapping in a releasable way by means of coupling that will be explained later.

Preferably, the L-shaped connection profile (3) is joined to the crossbar by welding.

Now, specifically relating to the slots (10), each of them has a substantially rectangular-shaped contour in which one of the largest sides (10) has an angle of inclination with respect to the longitudinal axis of the strut while the lower area of the opposite long side has a step. The coupling means present in the L-shaped connection profile (3) consist of a plurality of punched tabs (4) that are distributed along the length of one of the fins of the profile and oriented internally, being spaced from each other so that they fit into the slots (10) present in the strut, each of the tabs including adjacently a hook-shaped flange (5) intended to be housed in the step, and in which the tab (4) consists of a bridge section. It should be mentioned that one of the longer sides (101) has an angle of inclination with respect to the longitudinal axis (L) of the tab (4), such that in an overlapping condition between the connection profile (3) and the strut (1), the inclined sides of the slot and the tab are overlapping each other.

The tab (5) surrounds the slot (10) of the strut (1) from the rear, parallel to the lateral faces when it is fitted into the slot (10), generating the best configuration for both the entry and securing of the tab (5), to avoid the disengagement of the connection profile (3) and to give more structural rigidity to the assembly formed by the connection profile (3) and the strut (1).

Referring into greater detail, the strut (1) is formed by a substantially U-shaped cross section such that it defines a flat central portion (11) and two lateral fins (12) facing each other, wherein the central portion (11) is divided into two equal parts by a semicircular central groove (13) that extends longitudinally along its entire length, each of the equal parts having the slots (10) distributed along the length.

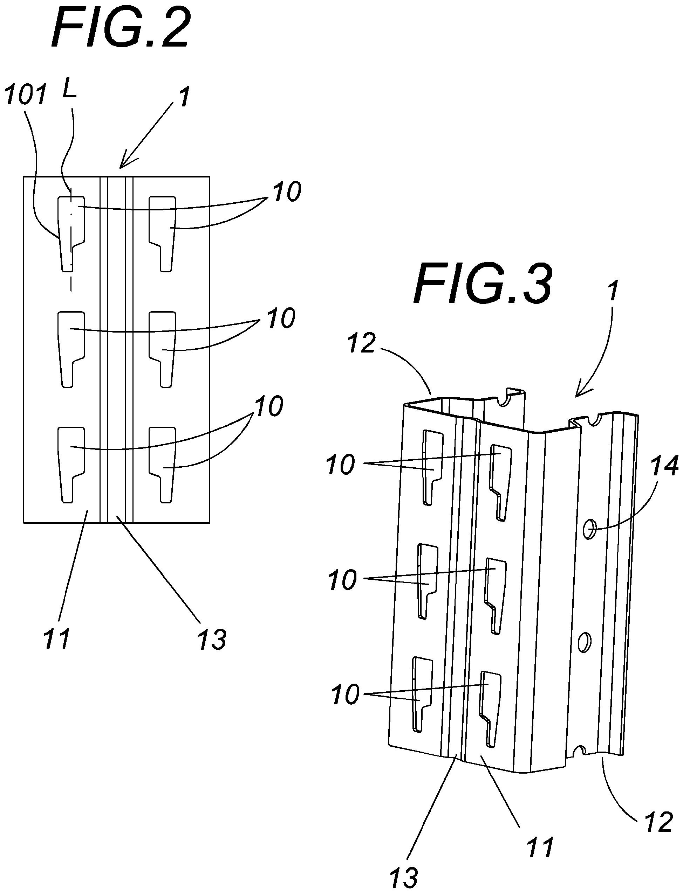

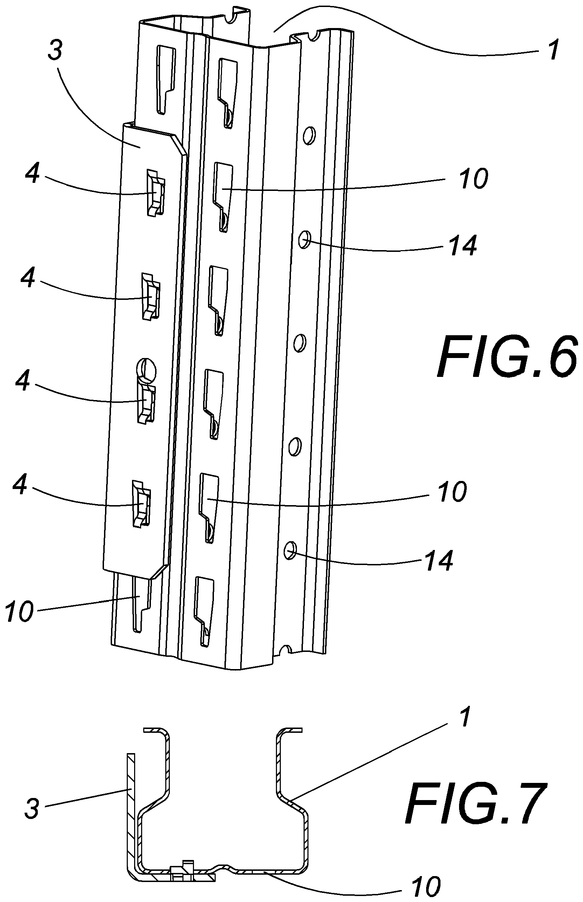

As seen in Figures 3, 6 and 7, each of the side fins (12) has a flat extension and a flat recessed portion having a plurality of holes (14) arranged at equidistance.

The details, shapes, dimensions and other accessory elements, used to manufacture the joining system of the invention, may be suitably substituted for others which do not depart from the scope defined by the claims which are included below.

## Claims

1. Joining system for the construction of metal shelves, comprising a strut (1) intended for a vertical arrangement, having a plurality of slots (10) distributed along the length of the strut and being spaced apart, and a crossbar (2) intended for an arrangement perpendicular to the strut which has at least one of its ends a connection profile (3) with an L-shaped cross section that is attachable to the strut (1) by overlapping in a releasable manner by coupling means, **characterized in that** the slots have a substantially rectangular-shaped contour in which one of the larger sides has an angle of inclination with respect to the longitudinal axis of the strut (1) while the lower area of the opposite larger side is provided with a step, and wherein the coupling means present in the L-shaped connection profile, consist of a plurality of die-cut tabs (4) that are distributed along the length of one of the fins of the connection profile, being distanced from each other so that they fit into the slots present in the strut (1), including contiguously in each of the tabs (4) a hook-shaped flange (5) intended to be housed in the step, and wherein the tab (4) consists of a bridge section, in which one of the longer sides (101) has an angle of inclination with respect to the longitudinal axis of the tab (4), such that in an overlapping condition between the connection profile (3) and the strut (1), the inclined sides of the slot and the tab are overlapping each other.

2. Joining system according to claim 1, **characterized in that** the strut (1) is formed by a substantially U-shaped cross section such that it defines a flat central portion (11) and two lateral fins (12) facing each other, in which the central portion (11) is divided into two equal portions by a central groove (13) that extends longitudinally, each of the equal portion having grooves (10) distributed along the length.

3. Joining system according to claim 2, **characterized in that** each of the side fins has a flat extension and a flat recessed portion provided with a plurality of holes arranged at equidistance.

4. Joining system according to any of the previous claims, **characterized in that** the "L"-shaped connection profile is joined to the crossbar by welding.
